# EUROPEAN PATENT APPLICATION

(11) **EP 2 068 529 A1**
(43) Date of publication of application: **10.06.2009**
(21) Application number: 07301620.6
(22) Date of filing: 03.12.2007
(51) Int. Cl.: H04L 29/06, H04L 29/08

(54) **Method of triggering a plurality of services and related session controller**

(71) Applicant: FRANCE TELECOM, 75015 Paris (FR)
(72) Inventor: Stefanescu, Claudiu, LONDON, NW6 3BJ (GB)
(74) Representative: Cabinet Plasseraud

(57) **Abstract**

Method of triggering a plurality of services in a multimedia system comprising a session controller (S-CSCF) and a plurality of application servers (AS1-AS3) each arranged for performing a respective service of said plurality of services. The method comprises, with respect to the call session controller (S-CSCF): receiving a request (7) for triggering said plurality of services; and sending a message (8,10,12) derived from said request (7) to each application server in order to trigger said plurality of services. The step of sending a message (8,10,12) includes, with respect to at least first and second services independent of each other, sending, independently of each other, at least first (10) and second (12) messages respectively to at least first (AS2) and second (AS3) application servers of said plurality of application servers, said first and second application servers being arranged for performing said at least first and second services respectively.

## Description

The present invention relates to the triggering of a plurality of services in a multimedia system.

Some multimedia systems, such as systems implementing IMS (IP (Internet Protocol) Multimedia System) make it possible for a user to access multiple services in the course of the same communication session. To do that, their architecture needs to allow the triggering of multiple application servers and to manage the transactions between them. Therefore several application servers, rather than a single one, can be involved in a signalling path.

The technical specification 3GPP TS 23.218 version 7.6.0 Release 7, "Digital Digital cellular telecommunications system (Phase 2+); Universal Mobile Telecommunications System (UMTS); IP Multimedia (IM) session handling; IM call model; Stage 2", published in June 2007, specifies such multiple services triggering.

In this prior art, the multiple services triggering is defined as a sequential (or serial) process. Indeed, the triggering of any service of a plurality of services (other than the first service) can occur only after the previous service has been processed. To this end, the services are ranked by priorities, and only after the acknowledgement of successful processing of a service will the following one in terms of priorities be eligible for triggering.

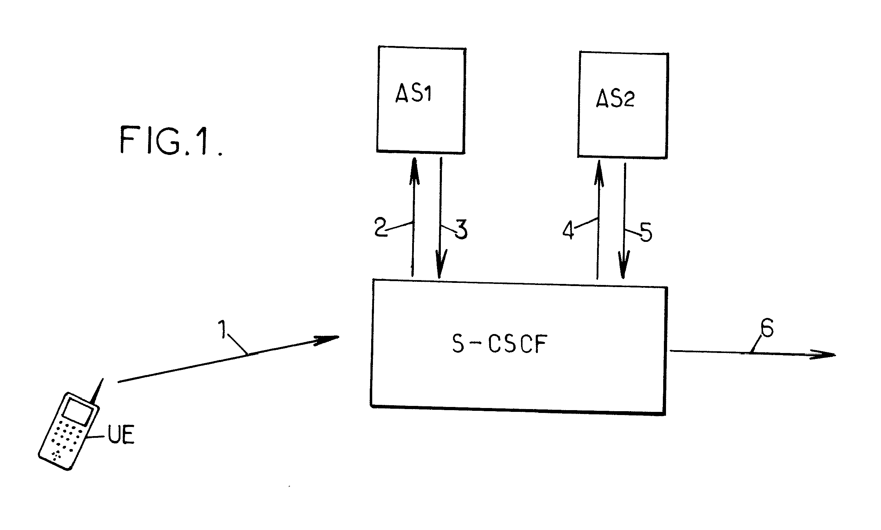

An example of this sequential process is given in the annex C of the above mentioned TS 23.218. It is reproduced in a simplified way in FIG.1. It is assumed that this example relates to a call UE-originating procedure (where UE stands for User Equipment), although it may apply both for UE-originating and UE-terminating procedures.

As shown in FIG.1, two application servers denoted AS1 and AS2 are assigned to provide additional services to a user holding a UE.

In step 1, the user initiates a session by sending an initial request which typically complies with the well known SIP protocol (Session Initiation Protocol). This request is sent to a serving session controller of the user, called S-CSCF (for Serving Call Session Control Function) in the IMS model.

On reception, the S-CSCF analyzes the request. In particular, it evaluates the Service Point Triggers (SPTs) included in the request and which indicate the points in the SIP signalling that may cause the S-CSCF to send the request to an application server, or put differently, which specify the application servers to be triggered. The S-CSCF further checks whether the SPTs match filter criteria it has obtained previously with respect to said user, such filter criteria defining the relevant SPTs for a particular application.

In this example, the S-CSCF first checks whether the SPTs included in the request match with the filter criteria X for the application server AS1. If they match, the S-CSCF forwards the request to AS1 (step 2).

Forwarding the request to AS1 triggers the service offered by AS1, which means that it wakes up this service for further use. AS1 performs the needed service logic and sends the request, possibly with service related modification, back to the S-CSCF (step 3). The possible service related modification may relate for example to the inclusion or exclusion of AS1 in the signalling path which will be used later by the UE, when the user wishes to perform the corresponding service.

On receiving the request from AS1, the S-CSCF then evaluates the SPTs it includes and checks whether they match with the filter criteria Y for the application server AS2. If they match, the S-CSCF forwards the request to AS2 (step 4). Otherwise, if the request does not match any further filter criteria, the S-CSCF forwards it to the next hop based on the route decision.

AS2 performs the needed service logic and sends the request, possibly with service related modification, back to the S-CSCF (step 5).

The reason why the SPTs are evaluated and checked against the filter criteria X for the application server AS1 first, and then against the filter criteria Y for the application server AS2 is based on predetermined priorities. The request will not be forwarded to AS2 and the related service logic will not be performed, if the processing expected with respect to AS1 has not been successful beforehand (it will be noted that successful processing does not necessarily imply successful triggering, as it applies for instance to AS1 returning an error message to the S-CSCF as long as the S-CSCF then follows a default handling-procedure in relation to the filter criteria).

Finally, the S-CSCF checks the request sent by AS2 and finds that no filter criteria is matched, then the S-CSCF forwards this request to the next hop based on the route decision (step 6).

Additional information concerning each step described above may be found in TS 23.218, in particular in section 5.2.

It is clear from this example that the sequential process provided by TS 23.218 creates a time dependency between consecutive services. And every time a new application server is involved, there is an additional session set-up delay added to the overall session set-up delay. If a large number of application servers are involved, the delay in the session set-up time could become considerable.

Morevover, with this sequential triggering mechanism, the order in which the services are executed is important. For instance, if an application server acts as a terminating SIP user agent, any following application servers in the chain would not receive the triggering request. This means that the only possible combination including an application server behaving as a terminating SIP user agent would be with the mentioned application server being the last in the triggering chain. Consequentially, there can only be one application server acting as a terminating user agent in any given session.

This sequential type of triggering mechanism may be suitable in scenarios where the services triggering order is important, i.e. where the services are dependent of one another.

However, numerous services are completely independent of each other, thus making sequential triggering a less efficient method, both time- and processing-wise.

An object of the present invention is to propose a more efficient method for triggering multiple services.

The invention thus proposes a method of triggering a plurality of services in a multimedia system comprising a session controller and a plurality of application servers each arranged for performing a respective service of said plurality of services. The method comprises the following steps performed with respect to the call session controller:
- receiving a request for triggering said plurality of services; and
- sending a message derived from said request to each application server of said plurality of application servers in order to trigger said plurality of services.

Also, sending a message derived from said request to each application server of said plurality of application servers includes, with respect to at least first and second services independent of each other, sending, independently of each other, at least first and second messages respectively to at least first and second application servers of said plurality of application servers, said first and second application servers being arranged for performing said at least first and second services respectively.

In this way, the triggering is done in parallel fashion with regard to the at least first and second services which are independent of each other.

Such mechanism could be used, depending on the nature of the services to be involved in a session, either as an alternative to the sequential triggering specified in the above mentioned TS 23.218 or in conjunction with it. It can bring performance improvements when triggering services of an independent nature, in particular in terms of reduction of the session set-up time, reduction of the time dependency on the number of application servers involved in a session, increase of flexibility and allowance for more diverse combinations of applications in the same session.

Sending a message derived from said request to each application server of said plurality of application servers may also include, with respect to at least a third service and a fourth service depending on the third service, sending at least a third message to a third application server of said plurality of application servers, and sending a fourth message to a fourth application server of said plurality of application servers only after the third message has been processed by the third application server. This corresponds to a combination of parallel triggering with respect to the first and second independent services and sequential triggering with respect to the third and fourth dependent services. In this embodiment, said third or fourth service may be the same as the first or second service, which means that the first or second service may depend on another service or, alternatively, another service may depend on the first or second service.

The parallel triggering of the invention can avoid any prioritization of the services. But when sending a message derived from said request to each application server of said plurality of application servers is carried out depending on a prior prioritization of the services of said plurality of services, the at least first and second services may be assigned the same priority. In contrast, the third service may be assigned a higher priority than said fourth service in this case.

The invention also proposes a session controller capable of being part of a multimedia system further comprising a plurality of application servers each arranged for performing a respective service of a plurality of services. The session controller is arranged for implementing the above mentioned method and comprises:
- means for receiving a request for triggering said plurality of services; and
- means for sending a message derived from said request to each application server of said plurality of application servers in order to trigger said plurality of services;

The means for sending a message derived from said request to each application server of said plurality of application servers include, with respect to at least first and second services independent of each other, means for sending, independently of each other, at least first and second messages respectively to at least first and second application servers of said plurality of application servers, said first and second application servers being arranged for performing said at least first and second services respectively.

The invention further proposes a computer program product comprising code instructions for carrying out the above mentioned method, when loaded and run on computer means which can be means of the session controller or of any other device or system.

The preferred features of the above aspects which are indicated by the dependent claims may be combined as appropriate, and may be combined with any of the above aspects of the invention, as would be apparent to a person skilled in the art.
- FIG.1 is a schematic view of an exemplary sequential triggering mechanism as explained in the annex C of the above mentioned TS 23.218 ;
- FIG.2 is a schematic view of an exemplary combined parallel + sequential triggering mechanism according to the invention ;
- FIG.3 shows an exemplary look-up table which may be used according to the above mentioned TS 23.218 ;
- FIG.4 shows an exemplary look-up table which may be used in an advantageous embodiment of the invention, with respect to the system of FIG.2.

The invention proposes a mechanism for triggering a plurality of services in a multimedia system, such as a system implementing IMS, comprising a session controller, such as an S-CSCF as defined in the above mentioned TS 23.218, and a plurality of application servers, each arranged for performing a respective service of said plurality of services.

By contrast with the sequential triggering mechanism of the prior art, the triggering mechanism of the invention is parallel, at least partly, which means that the requests would be processed and transmitted independently of one another with respect to independent services.

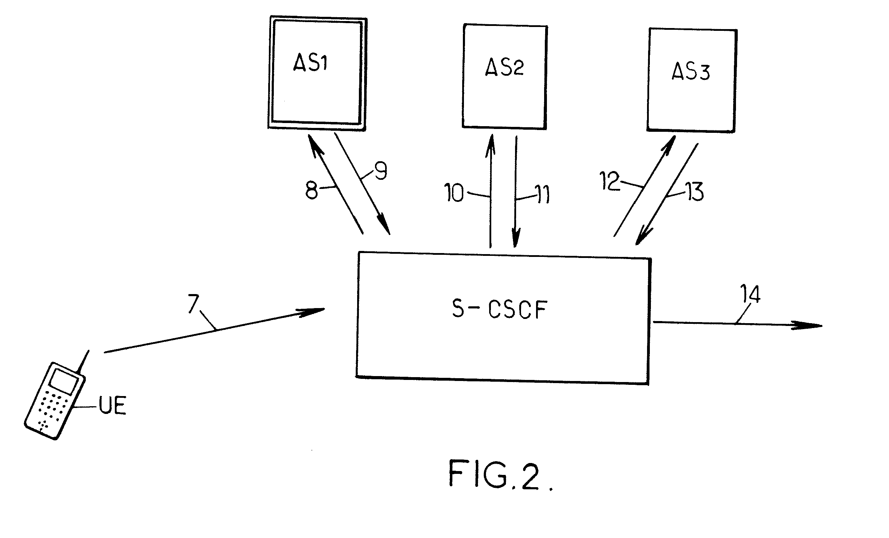

FIG.2 shows a non limitative example in an IMS system comprising three application servers AS1, AS2 and AS3, although it should be clear that only two or more than three application servers would be possible as well. In this example, the services residing on AS2 and AS3 are independent of each other, while they are both dependent on the service hosted on AS1. To make this hierarchy appear in the drawing, AS1 is doubly boxed in FIG.2.

In the example shown in FIG.2, an S-CSCF of the IMS system in question receives a request 7 from a user holding a UE. The request 7 may initiate a new session involving the UE. It may also be a request sent within the framework of an existing session.

The S-CSCF may evaluate whether the SPTs (Service Point Triggers) included in the initial incoming request 7 match filter criteria it has obtained previously with respect to said user. Besides, it identifies the related services that can be triggered in parallel because they are independent of each other, i.e. the services performed by AS2 and AS3 in the present example, as well as the related services that cannot be triggered in parallel because they are not independent of each other, i.e. the services performed by AS1 and AS2 and the services performed by AS1 and AS3 in the present example.

For each match, a message derived from the request 7 is generated and sent by the S-CSCF to each application server. The messages relating to independent services are sent independently of each other, while the messages relating to dependent services are sent according to this dependency.

In the present scenario, a message 8 derived from the request 7 (and could be the request 7 itself) is first sent to AS1 which would trigger the corresponding service. Then, only after this message 8 has been processed by AS1, messages 10 and 12 derived from the request 7 are respectively sent to AS2 and AS3 independently of each other. For example, the transmission of the messages 10 and 12 may be initiated when a reply 9 from AS1 is received at the S-CSCF in response to the sent message 8.

Therefore, only two logical steps are carried out in the example shown in FIG.2, the applications on AS2 and AS3 being triggered in the same logical step (parallel triggering). This is to oppose to the sequential prior art solution, in which three different and successive logical steps would be required as explained in the introduction.

This example is a case where both sequential (AS1 versus AS2 and AS3) and parallel (AS2 versus AS3) triggering mechanisms are employed. This is a likely real-life scenario and it also allows for better comparison between the ways the two mechanisms operate, as well as providing a clear image as to how they could interwork.

It must be clear however that only parallel triggering might be used according to the invention. For example, if the services performed by all application servers AS1-AS3 of FIG.2 were independent of each other, the three messages 8, 10 and 12 could be sent independently of each other, for example simultaneously. In this case there would be no need for the S-CSCF to wait for a reply from an application server for any message before sending the following one.

Unlike the sequential triggering of the prior art, in this case the generation and transmission of a message corresponding to the initial request is not conditioned by the acknowledgment of successful processing of a previous message, nor will its delivery impact in any way the generation and transmission of the following message.

The parallel triggering of the invention may be particularly suited for certain services, such as broadcast based services or other services in which delay is of concern.

It can make use of application servers operating in any one of the following modes: proxy server, redirect server, and also terminating user agent.

In the following, one possible implementation of the general principles of the invention is more particularly described with reference to FIG.2, with an illustrative purpose. Naturally, many other implementations would be suitable as well.

As explained in the above mentioned TS 23.218, the S-CSCF may be provided with filter criteria with respect to the user holding the UE. Those filter criteria define the relevant SPTs for a particular application. Each filter criterion (FC) may have a unique priority value. In this way, the services are prioritized.

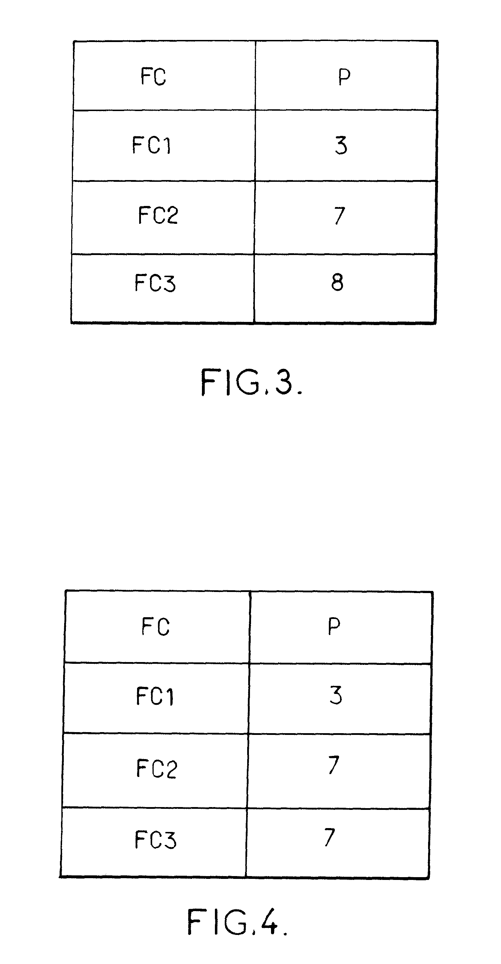

For instance, with reference to FIG.4, FC1 representing the FC for the application server AS1 has a higher priority (and thus a lower priority value, namely 3 in this example) than FC2 representing the FC for the application server AS2 and FC3 representing the FC for the application server AS3 respectively. This is because the services performed by AS2 and AS3 depend on the one performed by AS1.

Since AS2 and AS3 are arranged for performing services independent of each other, they are assigned the same (identical) priority, and thus have the same priority value of 7 in this example.

This is in contrast with the prior art as described in TS 23.218, in which, due to the sequential mode of operation, each FC is assigned a different priority. This is illustrated in FIG.3, where FC3 is assigned the priority value of 8 (instead of 7 in the example of FIG.4), that is higher than the priority value of 7 assigned to FC2.

A practical example of such relationship could be an application that offers a series of services, such as say, Presence, Push-to-Talk and Instant Messaging for a list of contact stored in the network (not on the UE) in a dynamic Address Book. The three services mentioned are independent of each other (i.e. the execution of any of them would not affect at all the execution of the others), and hence could all share the same priority. However, they are all dependent on the successful anterior triggering of the application server hosting the Address Book, since each of them uses the list of contact. Therefore, the Address Book needs to be triggered before them, and would hence be allocated a higher priority (and thus a lower priority value).

The S-CSCF assesses the filter criteria according to their respective priority, as described in TS 23.218. In addition, by identifying the filter criteria with the same priority value, the S-CSCF determines which services will have to be triggered in parallel.

With reference to FIG.2, upon receiving the triggering request 7, the S-CSCF evaluates the filter criteria it has obtained with respect to the user holding the UE. It further identifies the matches with the SPTs included in the request and decides what application server should be contacted for each individual matching filter criteria.

Upon identifying a set of filter criteria with the same priority, the S-CSCF may locally store the latest version of the request and then proceed to generate a message derived from the request for each match. These messages would be generated according to the standard procedure specified in the TS 23.218. They are then sent to the relevant application servers independently of each other.

With reference to FIG.2 again, this means that the S-CSCF may first store the request 7. It may then send to AS1 a message 8 derived from the request 7 (which could be the request 7 itself). AS1 may perform the needed service logic and possibly modify the message 8. The modification of the message 8 made by AS1 may comprise changes to one or several headers (e.g. Via, Route, Record-Route) of the message 8, for example to modify the route of the message. For instance, AS1 may modify the message 8 to be included in or excluded from the route.

The possibly modified message 8 is then sent as a reply 9 to the S-CSCF. The latest version of the request stored in the S-CSCF, which is likely to be the initial request 7 in this case, may then be updated according to information contained in the reply 9, after what the reply 9 may be discarded by the S-CSCF. Alternatively, the reply 9 may be stored at the S-CSCF as the latest version of the request, in replacement of the previously stored version of the request.

Messages 10 and 12 are generated by the S-CSCF from the latest available version for the request (those messages can also be considered as deriving step by step from the initial request 7) and independently sent to AS2 and AS3. AS2 and AS3 may in turn each modify the respective received message and return a corresponding reply 11 or 13 to the S-CSCF.

The changes between each reply (11 or 13) received at the S-CSCF and the corresponding previously sent message (10 or 12) are identified and integrated in the latest version available for the request. After such integration, the replies 11 and 13 may be discarded.

It should be noted that parallel triggering does not necessarily imply simultaneous transmission. With reference to the example illustrated in FIG.2, the S-CSCF could send out the messages 10 and 12 together (i.e. it does not start sending one of the messages out until both messages 10 and 12 have been generated), but it could also transmit the messages 10 and 12 as they are generated (on a first come, first served basis for instance). The second possibility may be a more efficient choice performance-wise. This is however a matter of implementation preferences.

A determined maximum waiting time may advantageously be set for receiving the individual replies from the application servers. In this case, identifying changes between a reply (e.g. the reply 11) and the respective sent message (e.g. the message 10) and integrating the changes into the latest version available for the request available at the S-CSCF may be carried out only when the reply is received within this maximum waiting time. In contrast, the replies not received within this maximum waiting time may be discarded and thus not processed by the S-CSCF.

The order in which the replies are processed is a matter of implementation. With reference to the example illustrated in FIG.2, the S-CSCF could wait for both replies 11 and 13 to arrive and only then start the processing, or it could process those replies as they arrive. The latter option may be more efficient.

Normally, clashes between replies received form different application servers, i.e. events where two or more replies received from applications servers triggered in parallel have suffered modifications to the same headers other than routing headers, should be limited, since those replies relate to independent applications which are unlikely to modify the same headers of the request. In the unlikely event of a clash between replies however, the last reply to arrive may advantageously bring the final modifications to the request stored locally (i.e. the request stored locally will be updated by the messages as they arrive).

When the maximum waiting time, if it exists, has expired, or, alternatively, upon receiving all the expected replies, before the maximum waiting time, if it exists, any processing of the request (i.e. all the necessary modifications to the original request based on each reply) is finished off and the resulting final request is sent on based on the route decision (reference 14 in FIG.2).

Any replies discarded because they did not arrive during the maximum waiting time, if it exists, may imply that the associated application servers are not included in the signalling path. Given the method of the parallel triggering mechanism, this would not affect any of the other services being triggered.

Still with reference to FIG.2, the round trip time between the S-CSCF and AS1, i.e. the time between the transmission of the message 8 and the reception of the reply 9 by the S-CSCF is denoted t1. Likewise, the round trip time between the S-CSCF and AS2 is denoted t2 and the round trip time between the S-CSCF and AS3 is denoted t3.

The total time total time taken before the request is forwarded on by the S-CSCF according to the route decision, i.e. the time between the reception of the request 7 and the transmission of the message 14 by the S-CSCF, would be T = t1 + max (t2, t3).

In comparison, the total time would be T = t1 + t2 + t3, if the triggering was done in the prior art sequential fashion with respect to AS2 and AS3 as well.

When generalizing to a number n of application servers all arranged for performing services independent of each other, the total time taken before the request is forwarded on by the S-CSCF according to the route decision would be T = t1 + t2 + t3 + ... + tn, with the sequential triggering of the prior art. Such total time is thus directly proportional to the number n of application servers involved in the session. The resulting delay, e.g. in the session set-up time, could become considerable if a large number of application servers are involved.

By contrast, the total time would be only T = max (t1, t2, t3,..., tn), with the parallel triggering of the invention. Such total time is thus in the order of the largest individual round trip time among t1, t2, t3,..., tn and has little if any dependency on the total number n of application servers involved in the session. The delay reduction may thus be quite significant with the invention, especially if a large number of application servers are involved.

When a determined maximum waiting time is set as explained above, it may advantageously be larger than the average round trip time among t1, t2, t3,..., tn, to avoid discarding useful replies from application servers at the S-CSCF.

Moreover, as the services eligible to be triggered in parallel are independent of one another, the order in which they are triggered is irrelevant. There is no need to use any prioritising in either the processing or the transmission of messages. In case, prioritising would be required for other reasons, for example to comply with TS 23.218, the advantageous mechanism described above with reference to FIG.4 might be used however.

Parallel triggering thus allows for more flexible combinations of applications to be triggered during the same session. For example, unlike with sequential triggering, more than one applications servers acting as a terminating user agent could be triggered during one session.

For a session that requires parallel triggering to be used in conjunction with sequential triggering, the application servers acting as a terminating user agent would have to be triggered last, but still this would allow for more than one to be triggered during the session.

Part or all the operations described above may be advantageously carried out by the S-CSCF or any similar session controller.

By contrast, the application servers may not be aware of those operations.

A computer program may also be used, that includes code instructions for carrying out the method as described above, when loaded and run on computer means of an S-CSCF or any other suitable device or system.

## Claims

1. A method of triggering a plurality of services in a multimedia system comprising a session controller (S-CSCF) and a plurality of application servers (AS1-AS3) each arranged for performing a respective service of said plurality of services, the method comprising the following steps performed with respect to the call session controller (S-CSCF):
- receiving a request (7) for triggering said plurality of services; and
- sending a message (8,10,12) derived from said request (7) to each application server of said plurality of application servers (AS1-AS3) in order to trigger said plurality of services;
wherein sending a message (8,10,12) derived from said request (7) to each application server of said plurality of application servers (AS1-AS3) includes, with respect to at least first and second services independent of each other, sending, independently of each other, at least first (10) and second (12) messages respectively to at least first (AS2) and second (AS3) application servers of said plurality of application servers, said first and second application servers being arranged for performing said at least first and second services respectively.

2. The method as claimed in claim 1, wherein sending a message (8,10,12) derived from said request (7) to each application server of said plurality of application servers (AS1-AS3) includes, with respect to at least a third service and a fourth service depending on the third service, sending at least a third message (8) to a third application server (AS1) of said plurality of application servers, and sending a fourth message (10,12) to a fourth application server (AS2,AS3) of said plurality of application servers only after the third message (8) has been processed by the third application server (AS1).

3. The method as claimed in claim 1 or 2, wherein sending a message (8,10,12) derived from said request (7) to each application server of said plurality of application servers (AS1-AS3) is carried out depending on a prior prioritization of the services of said plurality of services, and wherein said at least first and second services are assigned the same priority.

4. The method as claimed in claims 2 and 3, wherein said third service is assigned a higher priority than said fourth service.

5. The method as claimed in any one of the foregoing claims, further comprising:
- receiving a reply (9,11,13) from each application server of said plurality of application servers (AS1-AS3) in response to the respective sent message (8,10,12) ;
- identifying changes between said reply (9,11,13) and the respective sent message (8,10,12) ;
- integrating the changes into the latest version available for said request (7).

6. The method as claimed in claim 5, wherein identifying changes between said reply (9,11,13) and the respective sent message (8,10,12) and integrating the changes into the latest version available for said request (7) are carried out only when said reply is received within a determined maximum waiting time.

7. A session controller (S-CSCF) capable of being part of a multimedia system further comprising a plurality of application servers (AS1-AS3) each arranged for performing a respective service of a plurality of services, the session controller being arranged for implementing the method as claimed in any one of the foregoing claims and comprising:
- means for receiving a request (7) for triggering said plurality of services; and
- means for sending a message (8,10,12) derived from said request (7) to each application server of said plurality of application servers (AS1-AS3) in order to trigger said plurality of services;
wherein the means for sending a message (8,10,12) derived from said request (7) to each application server of said plurality of application servers (AS1-AS3) include, with respect to at least first and second services independent of each other, means for sending, independently of each other, at least first (10) and second (12) messages respectively to at least first (AS2) and second (AS3) application servers of said plurality of application servers, said first and second application servers being arranged for performing said at least first and second services respectively.

8. A computer program product comprising code instructions for carrying out the method as claimed in any one of claims 1-6, when loaded and run on computer means.
